# EUROPEAN PATENT APPLICATION

(11) **EP 2 857 143 A1**
(43) Date of publication of application: **08.04.2015**
(21) Application number: 12877662.2
(22) Date of filing: 31.05.2012
(51) Int. Cl.: B24B 27/06, B24D 3/00, B24D 11/00

(54) **FIXED-ABRASIVE-GRAIN WIRE-SAW, METHOD FOR MANUFACTURING SAME, AND METHOD FOR CUTTING WORKPIECE USING SAME**

(71) Applicant: Read Co. Ltd., Kanagawa 220-8143 (JP)
(72) Inventor: UEDA Yasuhiro, Watari-gun Miyagi 989-2302 (JP)
(74) Representative: Carpmael, Robert Maurice Charles
(86) International application number: PCT/JP2012/064043
(87) International publication number: WO 2013/179434

(57) **Abstract**

[Object] To provide a fixed abrasive grain wire saw that can improve precision of the cut plane of a workpiece and grinding efficiency and can prolong the product life, a method of manufacturing the fixed abrasive grain wire saw, and a method of machining a workpiece by use of the fixed abrasive grain wire saw.

[Solution] To fasten abrasive grains 2 to the outer circumferential surface of a metal core wire 1, a plurality of transfer rollers 18, in each of which many tiny holes 18a filled with an adhesive 3a are formed, are used to transfer the adhesive to the outer circumferential surface of the core wire so as to form, on the outer circumferential surface, a plurality of rows li of punctiform adhesive layers 3 that are linearly arrayed in the axial direction at regular intervals. The abrasive grains are tentatively fastened to the adhesive layers, after which the abrasive grains are permanently fastened with a metal plated layer 4 formed by electrolytic deposition.

## Description

### Technical Field

The present invention relates to a fixed abrasive grain wire saw that is suitable for slicing a workpiece made of, for example, a large-diameter silicon material, sapphire material, silicon carbide material, ceramics material, a magnetic material, or other hard brittle material, to a method of manufacturing the fixed abrasive grain wire saw, and to a method of cutting the workpiece by using the fixed abrasive grain wire saw.

### Background Art

A fixed abrasive grain wire saw in which abrasive grains made of diamond or the like is fastened to the outer circumferential surface of a piano wire or other metal wire having conductivity with a metal plated layer formed by electrolytic deposition has been known as one type of wire saws used in the slicing of a silicon material, sapphire material, magnetic material, or other hard brittle material. Patent Document 1 discloses a method of passing a current through a metal wire that passes through an abrasive grain layer deposited in a plating bath, as a typical method of manufacturing a fixed abrasive grain wire saw.

This type of fixed abrasive grain wire saw based on electrolytic deposition is advantageous in that a force with which abrasive grains are held is large and thereby they are hard to drop. However, abrasive grains are fastened at random to the outer circumferential surface of the wire in the plating bath during manufacturing, so many abrasive grain groups, in which many abrasive grains locally aggregate and are fastened, are easily formed. Furthermore, differences among individual products are likely to occur. At a wire part on which these abrasive grain groups are formed, when the wire is pressed against a workpiece during grinding, a force exerted on one abrasive grain is lowered, so a depth to which the workpiece is cut becomes small. Therefore, this type of fixed abrasive grain wire saw is problematic in that if many abrasive grain groups of this type are formed on a wire, grinding efficiency is lowered.

Furthermore, since abrasive grains are placed at random on the wire depending on probability and it is not possible to avoid the above abrasive grain groups from being formed, variations occur in rates at which individual abrasive grains are worn by grinding. As a result, roughness of the cut plane of the workpiece, that is, precision of the cut plane of the workpiece, is lowered.

Furthermore, at a wire part on which abrasive grain groups described above are formed, cutting chips are collected among abrasive grains during grinding and thereby clogging is likely to occur. At the clogged wire part, grinding resistance is increased and a large concentrated stress is exerted, causing the wire to be easily cut. This is problematic in that the life of the product is lowered. This clogging also lowers grinding efficiency and precision of a cut plane. The main factors of variations in rates at which abrasive grains are worn and clogging include tight contact among abrasive grains in a wire direction.

To solve the problems in the above prior art, the applicant proposed, in Patent Document 2, a fixed abrasive grain wire saw that is formed by spraying an adhesive to the outer circumferential surface of a wire to form a punctiform adhesive layer, tentatively fastening abrasive grains with the adhesive layer, and permanently fastening the tentatively fastened abrasive grains by nickel plating.

With the wire saw described in Patent Document 2, places of abrasive grains are controlled by a spray, so it is possible to suppress, to a certain extent, many abrasive grains from locally aggregating and being fastened to a certain extent when compared with the wire saw in Patent Document 1. As illustrated in Fig. 14, however, abrasive grains are still forced to be placed at random depending on probability and concern about the above problems is not cleared. The wire saw is susceptible to a further improvement.
[Patent Document 1] Japanese Examined Patent Application Publication 51-003439
[Patent Document 2] Japanese Unexamined Patent Application Publication No. 2004-237376

### Disclosure of Invention

### Problems to be Solved by the Invention

Therefore, a technical problem in the present invention is to provide a fixed abrasive grain wire saw that can improve precision of the cut plane of a workpiece and grinding efficiency and can prolong the product life, a method of manufacturing the fixed abrasive grain wire saw, and a method of machining a workpiece by use of the fixed abrasive grain wire saw.

### Means for Solving the Problems

An array-controlled fixed abrasive grain wire saw, in the present invention, to solve the above problems is a fixed abrasive grain wire saw formed by fastening many abrasive grains having a uniform granularity to the outer circumferential surface of a core wire with high strength as a single layer by use of a binder layer that covers the outer circumferential surface of the core wire; many punctiform adhesive layers are coated to the outer circumferential surface of the core wire so as to be apart from one another and are linearly placed along the axis of the core wire at regular intervals to form at least three adhesives layer rows; the abrasive grains are tentatively fastened by the adhesive layers and are then permanently fastened by the binder layer, and abrasive grains placed on each two mutually adjacent adhesive layers are fastened in a state in which the abrasive grains are mutually spaced.

The core wire is preferably made of a metal wire and the binder layer is preferably made of a plated metal.

According to the fixed abrasive grain wire saw having the structure described above, abrasive grains are placed on many punctiform adhesive layers that are linearly placed along the axis of the core wire at regular intervals and abrasive grains placed on each two mutually adjacent adhesive layers are fastened so as to be mutually spaced. Accordingly, it is possible to suppress the forming of an abrasive grain group in which many abrasive grains are locally aggregated and fastened and particularly to suppress tight contact of abrasive grains in the axial direction of the core wire. When a workpiece is ground, therefore, a depth to which the workpiece is cut by each abrasive grain can be adequately assured, so grinding efficiency can be improved. It is also possible to suppress variations in rates at which individual abrasive grains are worn due to grinding and thereby to improve roughness of the cut plane of the workpiece, that is, precision of the cut plane of the workpiece. Furthermore, the ease with which cutting chips of the workpiece are discharged is improved, so clogging among abrasive grains can be suppressed. Therefore, it is possible not only to prevent the wire from being broken and thereby prolong the life of the product but also to prevent grinding efficiency and precision of a cut plane from being lowered.

In an embodiment of the fixed abrasive grain wire saw in the present invention, the adhesive layer described above is preferably made of a rubber-based adhesive to have elasticity and preferably forms a buffer layer that allows the relevant abrasive grain that abuts a workpiece to move in a direction crossing the outer circumferential surface of the core wire during the machining of the workpiece. Then, variations in heights from the outer circumferential surface of the core wire to the tops of abrasive grains, that is, abrasive grain heights, can be eliminated by buffer layers, enabling precision of a cut plane to be further improved.

In an embodiment of the fixed abrasive grain wire saw in the present invention, the adhesive layers may be arrayed at equal intervals in each of the adhesive layer rows. Furthermore, the abrasive grains may be placed at equal intervals among the adhesive layer rows. If the adhesive layers are placed at equal intervals in the adhesive layer row as described above, variations in wear of individual abrasive grains due to grinding can be preferably further suppressed. In addition, the adhesive layers forming the adhesive layer rows may be placed on at least one spiral. Then, the ease with which cutting chips are discharged is more improved.

In the fixed abrasive grain wire saw described above, the minimum interval of abrasive grains in adhesive layer rows is preferably longer than the maximum interval of adhesive layer rows adjacent in the circumferential direction of the core wire from the viewpoint of grinding efficiency and the ease with which cutting chips are discharged. If the adhesive layer is circular and its diameter is smaller than or equal to an average abrasive grain diameter and larger than or equal to 30% of the average abrasive grain diameter, it is possible to suppress a plurality of abrasive grains from being fastened to one adhesive layer and to suppress an adhesive layer to which no abrasive grain is fastened from being formed, enabling abrasive grains to be efficiently paced without waste.

A method of manufacturing the fixed abrasive grain wire saw, described above, according to the present invention includes a step of placing a roller on a path through which the core wire moves, the roller having a plurality of tiny holes on its outer circumference in a circumferential direction, a step of filling the tiny holes in the roller with an adhesive, a step of moving the core wire while its outer circumferential surface is in contact with the outer circumference of the roller, a step of applying a punctiform adhesive layer to the outer circumferential surface of the core wire by transferring an adhesive through the tiny holes in a state in which a relative speed between the tiny holes in the roller that is rotating and the outer circumferential surface of the core wire that is moving has been adjusted so as to become zero, a step of dispersing abrasive grains to the outer circumferential surface of the core wire to which the adhesive has been transferred so as to tentatively fix the abrasive grains with the adhesive, and a step of further coating the outer circumferential surface of the core wire, on which the abrasive grains have been tentatively fixed, with a binder to permanently fasten the abrasive grains with the binder layer. Then, differences among individual products can be suppressed and their quality can thereby be made stable. In addition, the fixed abrasive grain wire saw described above can be efficiently manufactured.

In a state in which the fixed abrasive grain wire saw and a workpiece are mutually brought into pressure contact under a prescribed wire tension, when the workpiece is cut by moving the fixed abrasive grain wire saw in one way or bidirectionally, the workpiece can be efficiently and precisely cut.

### Brief Description of Drawings

[Fig. 1] Fig. 1 is a front view that schematically illustrates part of a first embodiment of a fixed abrasive grain wire saw in the present invention.
[Fig. 2] Fig. 2 is a schematic cross sectional view of the fixed abrasive grain wire saw in Fig. 1 as taken along line A-A.
[Fig. 3] Fig. 3 is a transverse cross-sectional view that illustrates a variation of the first embodiment of the fixed abrasive grain wire saw in the present invention.
[Fig. 4] Fig. 4 is a front view that schematically illustrates part of a second embodiment of a fixed abrasive grain wire saw in the present invention.
[Fig. 5] Fig. 5 is a front view that schematically illustrates part of a third embodiment of a fixed abrasive grain wire saw in the present invention.
[Fig. 6] Fig. 6 is a conceptual manufacturing process chart that illustrates an embodiment of a fixed abrasive grain wire saw manufacturing method in the present invention.
[Fig. 7] Fig. 7 schematically illustrates an example of an adhesive applying process in the manufacturing process in Fig. 6.
[Fig. 8] Fig. 8 illustrates an adhesive transfer process, in the adhesive applying process in Fig. 7, in which an adhesive is transferred to a core wire.
[Fig. 9] Fig. 9 is a photomicrograph that illustrates an example of a state in which the adhesive has been actually transferred to the core wire in the adhesive transfer process in Fig. 8.
[Fig. 10] Fig. 10 is a photomicrograph that illustrates an example of a fixed abrasive grain wire saw manufactured by the fixed abrasive grain wire saw manufacturing method in the present invention.
[Fig. 11] Fig. 11 schematically illustrates an embodiment of a method of machining a workpiece by using the fixed abrasive grain wire saw in the present invention.
[Fig. 12] Fig. 12 is a graph that illustrates results in a cutting performance test (an example for sapphire).
[Fig. 13] Fig. 13 is a graph that illustrates results in a cutting performance test (an example for SiC).

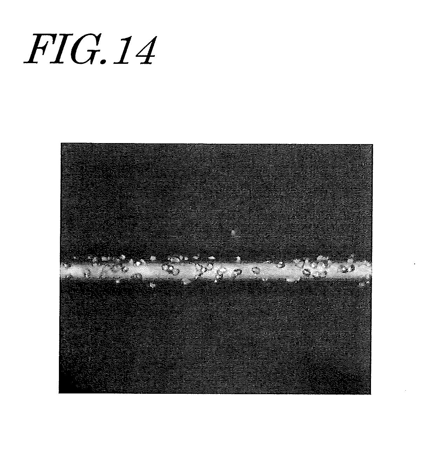

[Fig. 14] Fig. 14 is a photomicrograph that illustrates an example of a conventional fixed abrasive grain wire saw. Best Modes for Carrying Out the Invention

Embodiments of the present invention will be described below in detail with reference to the drawings.

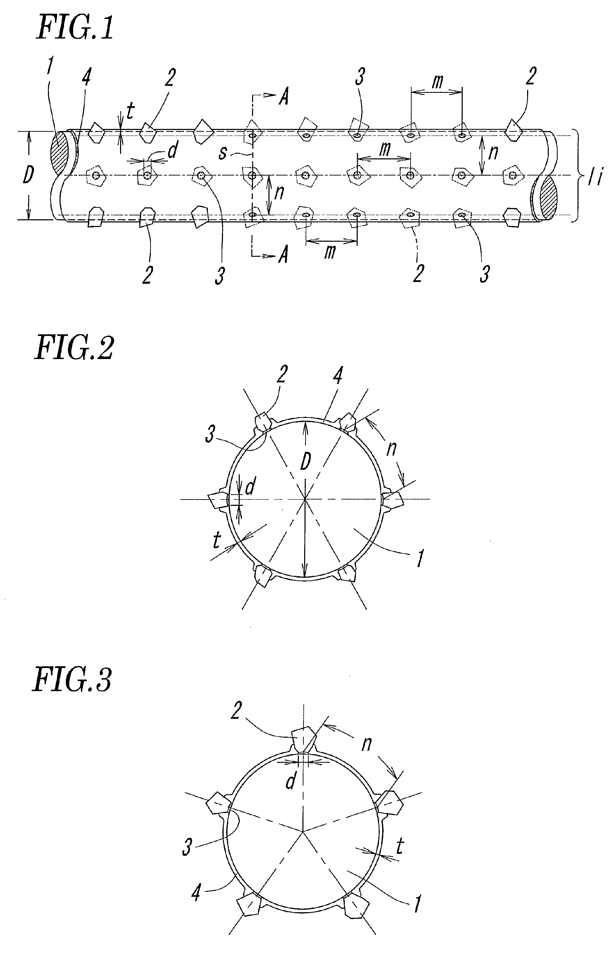

As illustrated in Figs. 1 to 5, a fixed abrasive grain wire saw in the present invention is formed by fastening many abrasive grains 2 having uniform granularity to the outer circumferential surface of a core wire 1 having high strength with a binder layer 4, which covers the entire outer circumferential surface of the core wire 1. In this case, many punctiform adhesive layers 3 are coated to the outer circumferential surface of the core wire 1 under control so that they are mutually spaced. The abrasive grains 2 are tentatively fastened (bonded) by the adhesive layers 3 and is permanently fastened by the binder layer 4. As a result, the abrasive grains 2 are fastened to the outer circumferential surface of the core wire 1 as a single layer. As a result, abrasive grains 2 placed on each two mutually adjacent adhesive layers 3 are fastened in a state in which they are mutually spaced.

The core wire 1 is a metal wire having a circular transverse cross section that is uniform over its longitudinal direction (that is, its axial direction). Examples preferably used as the metal wire include a wire made of heat-treated spring steel such as high-carbon steel or medium-carbon low-alloy steel, a wire made of processed spring steel such as a hard steel wire, a piano wire, a stainless steel wire, a cold-rolled steel wire, or an oil hardened and tempered wire, a wire made of super strength steel such as low-alloy steel, medium-alloy steel, high-alloy steel, or maraging steel, a wire made of metal fiber such as tungsten, molybdenum, or beryllium, and a wire made of amorphous metal fiber such as Fe-Si-B or Al-Y-Ni. If the core wire 1 is a piano wire, its diameter D is preferably at least 0.08 mm and at most 0.20 mm. If the diameter of the core wire 1 is smaller than 0.08 mm, adequate strength cannot be assured for the wire saw 1. If the diameter of the core wire 1 is larger than 0.20 mm, a cutting margin, which is necessary in the machining of a workpiece, becomes large and the material is more wasted.

As the abrasive grains 2, one or two types of diamond abrasive grains, CBN abrasive grains, AL₂O₃ abrasive grains, and SiC abrasive grains are preferably used. The average diameter of abrasive grains 2 used is appropriately set according to the type of a workpiece to be ground, the diameter of the core wire 1, and the placement of the abrasive grains 2.

The punctiform adhesive layers 3 are linearly placed along the axis of the core wire 1 at regular intervals so that they form at least three adhesive layer rows li (i = 1, 2, 3, ...). The placement of the abrasive grains 2 on the outer circumferential surface of the core wire 1 is determined by the adhesive layers 3. As a result, the abrasive grains 2 are fastened along the adhesive layer rows li. Preferably, an interval m at which the adhesive layers 3 are spaced in the axial direction of the core wire 1, the number of adhesive layers in the circumferential direction, and their placement are appropriately set so that the binder layer 4 does not come into contact with the workpiece during grinding between abrasive grains 2 placed on each two mutually adjacent adhesive layers 3 and that a clearance equal to or larger than the average abrasive grain diameter is assured. In consideration of grinding efficiency and the ease with which cutting chips are discharged, the minimum of the intervals m at which the adhesive layers 3 are adjacent in the axial direction is preferably longer than the maximum of the intervals n at which the adhesive layer rows li are adjacent in the circumferential direction.

It is preferable for the adhesive layer 3 to be substantially circular and have a diameter d that is at least 30% of the average abrasive grain diameter and at most the average abrasive grain diameter. Intrinsically, one abrasive grain 2 is preferably bonded to one adhesive layer 3. If the diameter of the adhesive layer 3 is smaller than 30% of the average abrasive grain diameter, the possibility that some abrasive grains 2 are not bonded to adhesive layers 3 is increased. If the diameter of the adhesive layer 3 is larger than the average abrasive grain diameter, the probability that a plurality of abrasive grains 2 are bonded to one adhesive layer 3 is increased. However, the diameter of the adhesive layer 3 can also be appropriately set so that two or three abrasive grains 2 are easily bonded to one adhesive layer 3 as necessary, for example, in a case in which high grinding speed is required.

There is no particular restriction on an adhesive that forms the adhesive layer 3 if the adhesive can bond the abrasive grain 2 to tentatively fasten it. However, adhesives based on rubber such as acrylic rubber, styrene rubber, butadiene rubber, nitrile rubber, and butyl rubber are preferably used from the viewpoint of fluidity and adhesiveness. Then, the adhesive layer 3 also functions as a buffer layer for the abrasive grain 2, so during the machining of a workpiece, the adhesive layer 3 allows each abrasive grain abutting the workpiece to elastically move in a direction crossing the outer circumferential surface of the core wire 1. As a result, variations in heights from the outer circumferential surface of the core wire 1 to the abrasive grain tops (that is, abrasive grain heights) can be eliminated by the adhesive layers 3.

The binder layer 4 is made of a plated metal. Its film thickness t is smaller than the average abrasive grain diameter. Part of the abrasive grain 2 is exposed from the surface the binder layer 4. The thickness of the binder layer 4 is preferably at least 30% of the average grain diameter of the abrasive grains 2 and at most 50% of it, and more preferably at least 30% and at most 40%. If the thickness of the binder layer is smaller than 30%, a force with which the abrasive grain 2 is held may not be adequately assured. If the thickness is larger than 50%, an amount by which the abrasive grain 4 protrudes from the surface of the binder layer may not be adequately assured. In view of this, nickel, copper, or chromium is preferably used to form a plated metal used as the binder described above. If, for example, a covered abrasive grain covered with a thin metal film is used as the abrasive grain 2, the entire surface of the abrasive grain 2 may be covered by the binder layer 4 together with the surface of the core wire 1.

With the above fixed abrasive grain wire saw having the structure described above, abrasive grains 2 are placed on many punctiform adhesive layers 3 that are placed along the metal core wire 1 in a row at regular intervals. In addition, abrasive grains 2 placed on each two mutually adjacent adhesive layers 3 are fastened in a state in which the abrasive grains 2 are mutually spaced. Therefore, it is possible to suppress the forming of an abrasive grain group in which many abrasive grains are locally aggregated and fastened and particularly to suppress tight contact of abrasive grains 2 in the axial direction of the core wire 1.

When a workpiece is ground, therefore, a depth to which the workpiece is cut by each abrasive grain 2 can be adequately assured, so grinding efficiency can be improved. It is also possible to suppress variations in rates at which individual abrasive grains 2 are worn due to grinding, and thereby it is possible to improve the roughness of the cut plane of the workpiece, that is, precision of the cut plane of the workpiece. Furthermore, the ease with which cutting chips of the workpiece are discharged is improved, so clogging among abrasive grains 2 can be suppressed. Therefore, it is possible not only to prevent wire breakage and thereby prolong the life of the product but also to prevent grinding efficiency and precision of a cut plane from being lowered. If a rubber-based adhesive is used as the adhesive layer 3 so that the adhesive layer 3 also functions as a buffer layer, variations in abrasive grain heights among fastened abrasive grains can be eliminated, enabling precision of a cut plane to be further improved.

The placement of the adhesive layers 3 will be more specifically described below. In a first embodiment of the fixed abrasive grain wire saw illustrated in Figs. 1 to 3, six (Figs. 1 and 2) or five (Fig. 3) adhesive layer rows li are formed in the circumferential direction, in each of which the punctiform adhesive layers 3 are linearly placed on the outer circumferential surface of the core wire 1 along the axis of the core wire 1 at equal intervals m. In this embodiment, adhesive layers 3 are coated in the axial direction at equal intervals m in each of the adhesive layer rows li, and intervals m of the adhesive layers 3 are the same among the adhesive layer rows li. The positions of the adhesive layers 3 in the axial direction (that is, phases) substantially match among the adhesive layer rows li. Therefore, ring-shaped rows s, in which the adhesive layers 3 are orthogonal to the axis in the circumferential direction, are formed. The ring-shaped rows s are placed side by side in the axial direction at equal intervals m. These adhesive layer rows li are placed in parallel at equal intervals n in the circumferential direction as well.

In this embodiment, the intervals m of the adhesive layers 3 are not necessarily the same among the adhesive layer rows li. For example, two types of adhesive layer rows li with different intervals m may be alternately placed in the circumferential direction. Alternatively, all intervals m of the adhesive layers 3 may differ among the adhesive layer rows li. However, any interval m may be preferably a multiple of the minimum interval mmin. The positions (phases) of the adhesive layers 3 in the axial direction do not need to match among the adhesive layer rows li. For example, in Fig. 1, the phases of the adhesive layer rows li in the axial direction may be alternately shifted by 180 degrees. The number of adhesive layer rows li is not limited to the number of adhesive layer rows li illustrated in the drawing; at least three adhesive layer rows li are enough. The intervals n of the adhesive layer rows li in the circumferential direction do not also need to be always the same.

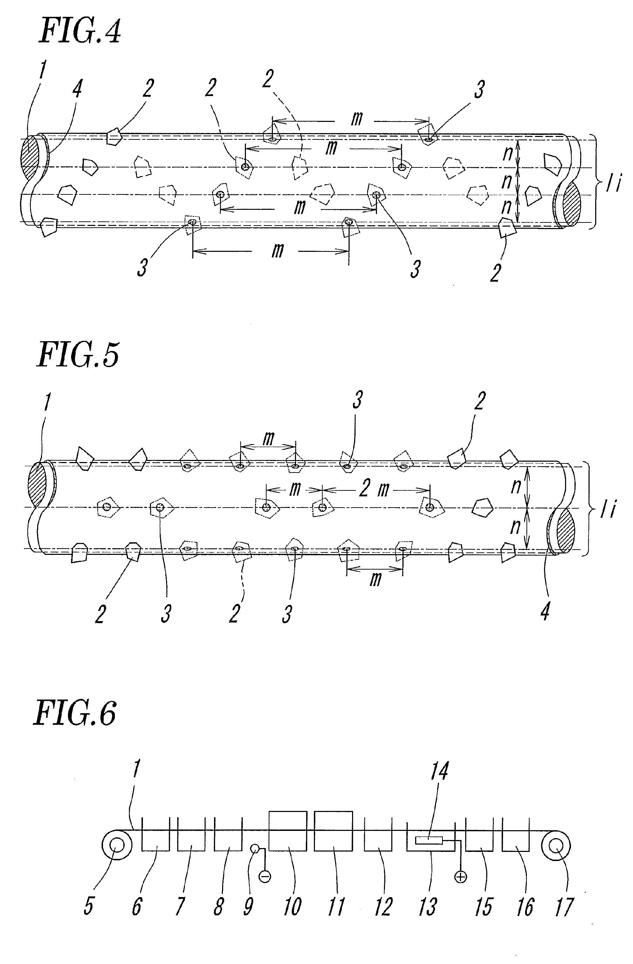

In a second embodiment illustrated in Fig. 4 as well, adhesive layers 3 are coated in the axial direction at equal intervals m in each of the adhesive layer rows li, and intervals m of the adhesive layers 3 are the same among the adhesive layer rows li, as in the first embodiment. The intervals of the adhesive layer rows li in the circumferential direction are also the same. However, the positions (phases) of the adhesive layers 3 in the axial direction are substantially equally shifted in succession among the adhesive layer rows li. As a result, the abrasive grains forming all adhesive layer rows li are placed on one spiral. The intervals n of the adhesive layer rows li in the circumferential direction do not need to be always the same. Two or more spirals may be formed by the adhesive layers 3.

Next, in a third embodiment illustrated in Fig. 5, adhesive layer rows li formed by coating adhesive layers 3 in the axial direction at equal intervals m and adhesive layer rows li formed by repeatedly placing an adhesive layer 3 at an interval of m and then an adhesive layer 3 at an interval of 2m are alternately placed in the circumferential direction. In this embodiment, the above two types of adhesive layer rows li in the axial direction are 180-degree out of phase with each other. However, this is not a limitation; the two types of adhesive layer rows li may be in phase with each other. All adhesive layer rows li may be formed by repeating a combination of different intervals as in the latter.

In the fixed abrasive grain wire saws in the first, second, and third embodiments, the abrasive grains 2 are fastened by the binder layer (plated metal layer) in a state in which the abrasive grains 2 are positioned by the adhesive layers 3 arrayed as described above. As a result, abrasive grain rows that are substantially along the adhesive layer rows li are formed.

Next, a method of manufacturing the fixed abrasive grain wire saw described above will be described in detail with reference to Figs. 6 to 9.

As illustrated in Fig. 6, this manufacturing method generally includes a step of coating many punctiform adhesive layers 3 at regular intervals along the core wire 1 by transferring an adhesive onto the outer circumferential surface of the core wire 1 having high strength through tiny holes in the outer circumferential surface of a roller, a step of tentatively fastening abrasive grains 2 to the adhesive layers 3 to position the abrasive grains 2, and a step of covering the outer circumferential surface of the core wire 1 with a single binder layer 4 formed by a plated metal to permanently fasten the abrasive grains 2, which have been tentatively fastened, onto the outer circumferential surface of the core wire 1 in a state in which part of the abrasive grains 2 is exposed from the surface of the binder layer 4.

More specifically, the core wire 1 is horizontally drawn out from a first bobbin 5 at constant speed and is degreased in an immersion degreasing bath 6, after which the core wire 1 passes through an acid immersion bath 7 so as to be acid-cleaned and is then water-cleaned in a first water cleaning bath 8.

The degreasing liquid used in the immersion degreasing bath 6 is a generally-used alkaline degreasing liquid. Examples of the degreasing liquid include an aqueous solution of tribasic sodium phosphate, an aqueous solution of sodium orthosilicate, and an aqueous solution of sodium carbonate. However, there is no particular restriction. The acid solution used in the acid immersion bath 7 is a generally-used mixed solution including sulfuric acid, hydrochloric acid, nitric acid, or the like. When the acid solution is prepared, its composition needs to be changed according to the core wire material so that an optimum acid treatment condition is selected.

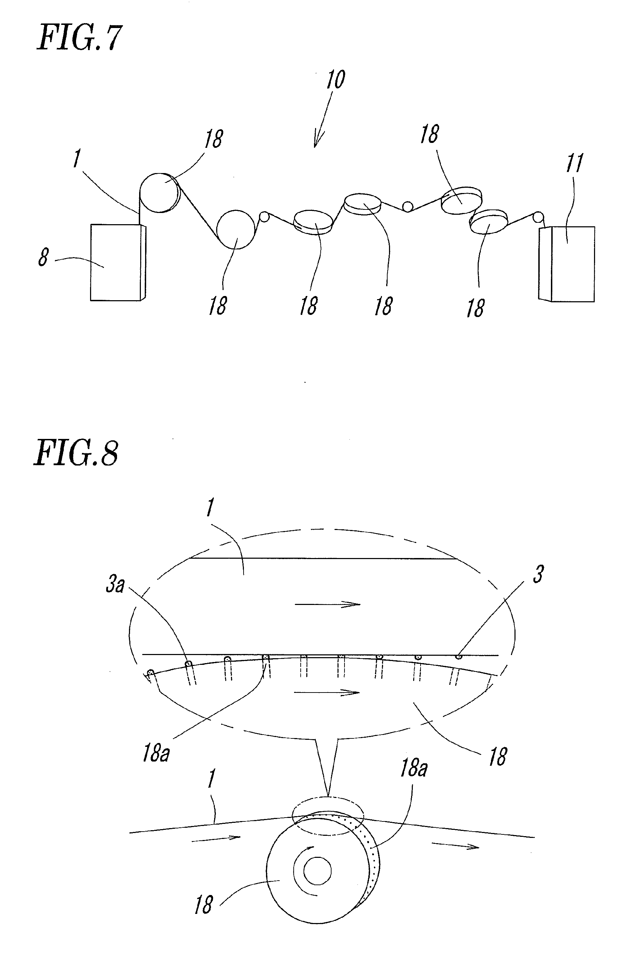

Next, the core wire 1, which has been water-cleaned in the first water cleaning bath 8, is fed out to an adhesive applying device 10, where an adhesive 3a is transferred to the outer circumferential surface of the core wire 1, applying many punctiform adhesive layers 3 to the outer circumferential surface of the core wire 1 with their positions controlled. The adhesive applying device 10 is structured so that, as schematically illustrated in Figs. 7 and 8, the fed core wire 1 is brought into contact with the outer circumferences of adhesive transfer rollers 18, which rotate, by being wound on their outer circumferences and the adhesive 3a expelled from the outer circumference of each roller 18 in a punctiform manner is transferred to the outer circumferential surface of the core wire 1.

The process of transferring and applying this adhesive will be described below in detail.

A row of tiny holes 18a is formed on the outer circumferential surface of the adhesive transfer roller 18 along its circumferential direction, and these tiny holes 18a communicate with a supply source (not illustrated) from which an adhesive (adhesive dissolved in an organic solvent) is supplied. The adhesive is supplied from the supply source to the tiny holes 18a and a slight amount of adhesive 3a is expelled to the outer circumferential surface of the roller 18 through the tiny holes 18a.

If the size of the tiny hole is at least 30% of the average abrasive grain diameter and at most the average abrasive grain diameter, the adhesive layer 3 can be coated to a more appropriate range of the diameter d. Accordingly, the probability that only one abrasive grain is fastened to one adhesive layer in a later process is increased, and a wire saw with a single-grain array can be manufactured.

As described above, there is no particular restriction on the adhesive used here if the adhesive can tentatively fasten the abrasive grains 2 in a later process. However, adhesives based on rubber such as acrylic rubber, styrene rubber, butadiene rubber, nitrile rubber, and butyl rubber are preferable from the viewpoint of fluidity and adhesiveness. There is also no particular restriction on the organic solvent if it can dissolve the target adhesive. However, aromatic hydrocarbon such as xylene, toluene, and the like or aliphatic hydrocarbon such as butadiene, normal hexane, and the like is suitable from the viewpoint of the ease of handling.

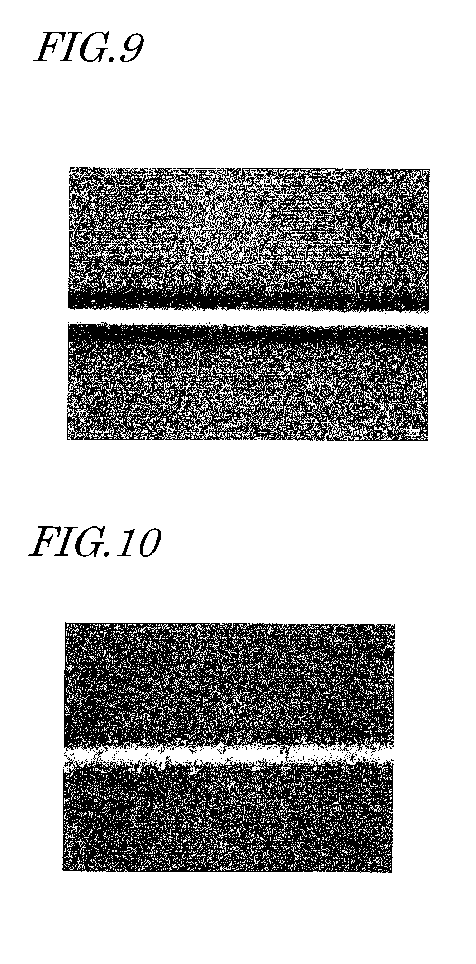

When the adhesive 3a is transferred from this roller 18 to the core wire 1, the core wire 1 fed out in the previous process is wound on the outer circumferential surface of the roller 18 so as to be along the tiny holes 18a and the roller 18 is rotated in a direction in which the core wire 1 is fed out so that the circumferential speed of the roller 18 matches the speed at which the core wire 1 is fed out. Then, the outer circumferential surface of the roller 18 and the core wire 1 can be brought into contact with each other at a relative speed of zero. As a result, the adhesive 3a can be accurately transferred from the row of tiny holes 18a to the outer circumferential surface of the core wire 1 as the punctiform adhesive layers 3, forming the adhesive layer row li as illustrated in Fig. 9. In this photograph, the diameter D of the core wire 1 is 100 µm, the diameter d of the adhesive layer 3 is 10 µm, and its interval m is 100 µm.

In this photograph, only one row of tiny holes 18a is formed on a flat area on the roller's outer circumferential surface due to a restriction on the drawing sheet, but this is not a limitation. For example, tiny holes 18a may be formed on a curved concave or convex surface. Alternatively, tiny holes 18a may be placed in any of various forms depending on the array of adhesive layers 3 to be coated to the core wire 1.

Therefore, adhesive layer rows li can be formed on the outer circumferential surface of the core wire 1 in any of various forms by appropriately adjusting the number of rollers 18, their placement, the shape of the outer circumferential surface of the roller 18, the number of tiny holes 18a formed in the roller 18, and the placement of the tiny holes 18a.

A case in which the method of manufacturing a wire saw as illustrated in Figs. 1 and 2 will be taken as an example to specifically explain the method of manufacturing the wire saw.

In the adhesive applying device 10 in this example, to place six adhesive layer rows li in the circumferential direction of the core wire 1 in parallel, six adhesive transfer rollers 18 are placed in succession along the path on which the core wire 1 moves, as illustrated in Fig. 7. The core wire 1 is wound on these rollers 18. To form the adhesive layer rows li at equal intervals in the circumferential direction of the core wire 1, these six rollers 18 are placed so as to be inclined at equal angular increments (that is, 60-degree increments). To place the adhesive layers 3 in a row at equal intervals in the axial direction of the core wire 1, tiny holes 18a are formed in a row at equal intervals on the outer circumferential surface of each roller 18 as well.

These rollers 18 are rotated at a circumferential speed that matches the speed at which the core wire 1 is fed out. Then, the adhesive 3a expelled from the tiny holes 18a is transferred to the outer circumferential surface of the core wire 1 in a state in which the rotational phases of these rollers are adjusted. As a result, the adhesive layers 3 are coated to the outer circumferential surface of the core wire 1, forming adhesive layer rows li as illustrated in Figs. 1 and 2. In this case, the rotational phases of the rollers are preferably adjusted so that positions in the axial direction of the core wire 1 at which the adhesive 3a is transferred from the rollers 18 are substantially the same.

The core wire 1 with the adhesive layer rows li formed on its outer circumferential surface as described above is then fed out to an abrasive grain attaching device 11. In this abrasive grain attaching device 11, abrasive grains 2 are dispersed from the periphery of the core wire 1 to its outer circumferential surface. As a result, the abrasive grains 2 are tentatively fastened to the outer circumferential surface of the core wire 1 by the adhesive layers 3.

Furthermore, the core wire 1 on which the abrasive grains 2 have been tentatively fastened is cleaned in a second water cleaning bath 12, after which a metal plate 14 connected to an anode passes through an electrolytic plating bath 13 placed in an electrolytic plating liquid. At this time, a plating metal used as a binder is deposited on the outer circumferential surface of the core wire 1 connected to a cathode 9. Then, the entire outer circumferential surface of the core wire 1 is covered by the binder layer 4 formed with the metal plate, and the abrasive grains 2 are permanently secured to the outer circumferential surface of the core wire 1 by the binder layer 4.

The metal plate 14 used as the anode is formed with the same metal as the plating metal selected as a binder. The electrolytic plating liquid also includes the same metal as the plating metal selected as a binder. The thickness t of the binder layer 4 is set to an extent in which part of each abrasive grain 2 is exposed from the surface of the binder layer 4, that is, set so as to be smaller than the average abrasive grain diameter.

Then, the core wire 1 with the abrasive grains 2 permanently fastened to its outer circumferential surface is water-cleaned in a third water cleaning bath 15 and is subjected to rust proofing in a rust proofing bath 16, after which the core wire 1 is wound on a second bobbin 17. As a result, a fixed abrasive grain wire saw as illustrated in Fig. 10 can be obtained.

In the method, as described above, of manufacturing a fixed abrasive grain wire saw, abrasive grains are reliably fastened at necessary locations, so variations in quality are eliminated. Furthermore, abrasive grains can be placed without waste only at locations that are required to achieve optimum grinding efficiency, so a fixed abrasive grain wire saw can be economically manufactured. It is possible to prevent defective products due to abrasive grain aggregation or a difference in an abrasive grain density between the front and the back as in a case in which abrasive grains are fastened at random, so a yield in manufacturing can be improved. A fixed abrasive grain wire saw that can achieve desired grinding efficiency and precision of a cut plane can be manufactured by setting an appropriate interval at which abrasive grains are arrayed according to the material and size of the workpiece.

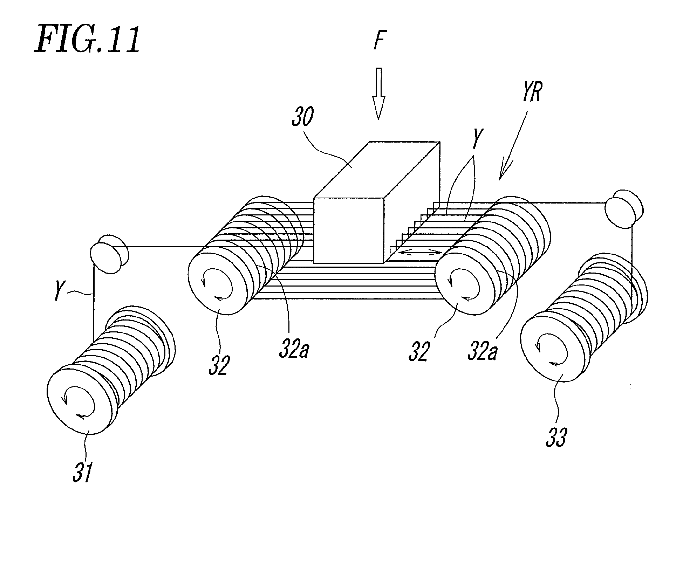

When a workpiece is cut by using the fixed abrasive grain wire saw described above, a machining apparatus as illustrated in, for example, Fig. 11 is used. The machining apparatus winds a wire saw Y drawn from a supply reel 31 on two main rollers 32, each of which has a spiral guide groove 32a on its outer circumference, along the guide grooves 32a, forming a wire saw raw YR, in which wire saws Y are placed in parallel at constant intervals, between the tops of the two main rollers 32. The tops of the wire saws Y are wound on a take-up reel 33.

Each wire saw Y in the wire saw row YR is moved in one way or bidirectionally by synchronously rotating the reels 31 and 33 and main rollers 32. At this time, when a prescribed wire tension is applied to the wire saw Y and the wire saw Y and an ingot 30 used as the above workpiece are brought into pressure contact with each other at prescribed machining speed and under a machining load F, the ingot 30 can be machined in a short time and wafers with superior surface precision can be obtained.

The fixed abrasive grain wire saw, the method of manufacturing the fixed abrasive grain wire saw, and a method of cutting a workpiece by using the fixed abrasive grain wire saw according to the present invention are not limited to the embodiments described above; many variations are possible without departing from the intended scope of the present invention.

### Example

An example of the present invention will be described below in detail. However, the present invention is not limited to the example below. Here, ingots were ground by using a fixed abrasive grain wire saw manufactured according to the present invention and a fixed abrasive grain wire saw manufactured by a conventional method, the fixed abrasive grain wire saw being used as a comparative example, and cutting performance was compared and evaluated.

The fixed abrasive grain wire saw according to the present invention is equivalent to an embodiment in Figs. 1 and 2. Specifically, the fixed abrasive grain wire saw is as illustrated in Fig. 10. It was manufactured by the manufacturing method illustrated in Figs. 6 to 8; six adhesive layer rows, each of which was formed by linearly placing many punctiform adhesive layers at constant intervals of 200 µm, were placed in parallel on the outer circumferential surface of a core wire in the circumferential direction of the core wire so as to be spaced at equal angular intervals, after which diamond abrasive grains were tentatively fastened to the adhesive layers and were then permanently fastened through nickel electrolytic deposition. The diameter of the adhesive layer was set to 10 µm.

The fixed abrasive grain wire saw used as a comparative example was manufactured by substantially uniformly dispersing diamond abrasive grains to the surface of a wire and performing nickel electrolytic deposition; in the adhesive applying process in the manufacturing process in Fig. 6, many punctiform adhesive layers were formed on the outer circumferential surface of a piano wire by spraying an adhesive dissolved in an organic solvent from the periphery of the piano wire while the piano wire was being fed out at constant speed; in a later process, abrasive grains were tentatively fastened to each adhesive layer as a single layer; in a further later process, the piano wire was passed through an electrolytic plating bath to have the piano wire undergo nickel electrolytic deposition. The thickness of the binder layer formed by nickel electrolytic deposition was set as in the above example.

### [Example]

A fixed abrasive grain wire saw was manufactured by using a core wire formed with a piano wire having a diameter of 160 µm and abrasive grains having an average abrasive grain diameter of 30.4 µm. A solution of 15% acrylic rubber and 85% normal hexane was used as an adhesive to be supplied to the adhesive transfer roller and an aqueous solution, which was prepared to a pH of 4.0 with 500 grams of nickel sulfamate per little, 10 grams of nickel dichloride per little, and 20 grams of boric acid per little, was used as the plating liquid in the electrolytic plating bath 11 to permanently fasten the abrasive grains by nickel plating at a liquid temperature of 50°C and with a current density of 15 A/dm². The nickel film thickness was set to 10 µm, which is about 30% of the average abrasive grain diameter. The resulting fixed abrasive grain wire saw had substantially equal abrasive grain heights, and its average wire diameter was 239 µm. The whole length of the fixed abrasive grain wire saw was 10 km.

### [Comparative example]

A single-layer fixed abrasive grain wire saw was manufactured by using a core wire formed with a piano wire having a diameter of 160 µm and abrasive grains having an average abrasive grain diameter of 30.4 µm. A solution of 15% acrylic rubber and 85% normal hexane was used as an adhesive to be sprayed. An aqueous solution, which was prepared to a pH of 4.0 with 500 grams of nickel sulfamate per little, 10 grams of nickel dichloride per little, and 20 grams of boric acid per little, was used as a plating liquid in the electrolytic plating bath to permanently fasten the abrasive grains by nickel plating at a liquid temperature of 50°C and with a current density of 15 A/dm². The nickel film thickness was set to 10 µm, which is about 30% of the average abrasive grain diameter. The resulting single-layer fixed abrasive grain wire saw had substantially equal abrasive grain heights, and its average wire diameter was 238 µm. The whole length of the fixed abrasive grain wire saw was 10 km.

A plurality of fixed abrasive grain wire saws of this type were placed in parallel as illustrated in Fig. 11 and were bidirectionally moved at a linear speed of 500 m/minute to cut sapphire (with a hardness of about 2000 Hv) by using a water-soluble working fluid under the conditions that the wire tension was 35 N, a wire interval was 1.1 mm, wire feeding speed was 18 mm/hour, and a rate at which a new wire was supplied was 1.0 m/minute. As a result, 27 slices, each of which was 2 inches in diameter and 30 mm long, were obtained. All of these slices were used to obtain a variation TV5 in thickness (a difference between the maximum thickness and the minimum thickness at five in-plane points, which were the central point and four points spaced around it at 90-degree intervals).

Table 1 below indicates results of performance comparison between the fixed abrasive grain wire saw in the example of the present invention and the fixed abrasive grain wire saw in the comparative example.

**[Table 1]**

| Evaluation results of cutting performance | | | | | |
|---|---|---|---|---|---|
| | Piano wire diameter (µm) | Average abrasive grain diameter (µm) | Average wire diameter of wire saw (µm) | Kerf width (µm) | TV5 (µm) |
| Example | 160 | 30.4 | 229 | 263 | 17.5 |
| Comparative example | 160 | 30.4 | 228 | 251 | 20.9 |

As seen from Table 1, with the fixed abrasive grain wire saw in the example of the present invention, the variation TV5 in wafer thickness was improved by a little more than about 10% when compared with the fixed abrasive grain wire saw in the comparative example. Therefore, it was confirmed that the roughness of the cut plane of a workpiece, that is, precision of the cut plane, is improved.

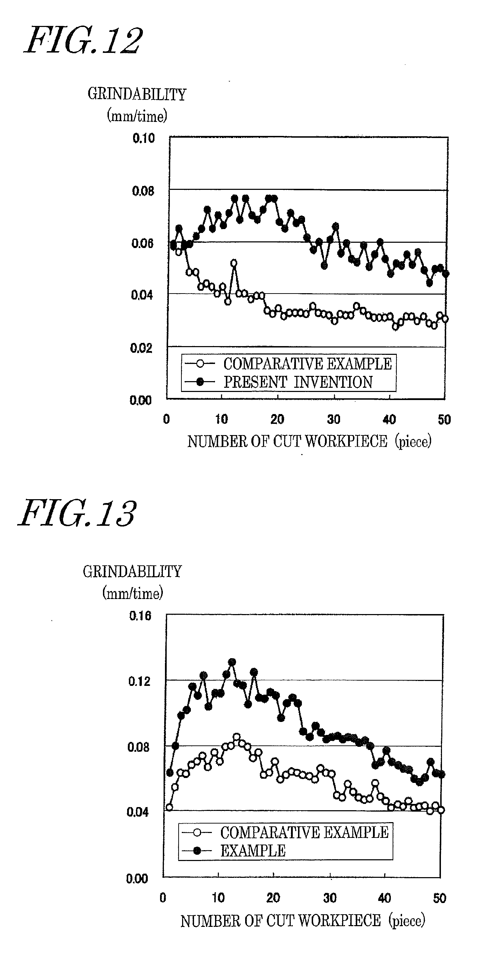

Next, while 40 meters of each of these wire saws was bidirectionally moved at a linear speed of 200 m/minute, a sapphire workpiece and SiC workpiece that had a width of 30 mm in a direction in which the wire saw was moved were cut by using tap water as a working fluid under the conditions that a machining load was 8 N and wire tension was 10 N. Of the cutting performance of the two wire saws, their grinding capabilities were evaluated. Figs. 12 and 13 illustrate comparison and evaluation results for each workpiece. These results were obtained by cutting 50 sapphire workpieces and 50 SiC workpieces. The horizontal axis in the drawings indicates the number of cut workpieces, and the vertical axis indicates a depth to which the workpiece was cut while the wire saw was moved and returned once, that is, grindability. For both sapphire and SiC, the fixed abrasive grain wire saw in the example in the present invention indicated higher values in an initial grinding capability than the fixed abrasive grain wire saw in the comparative example. It was confirmed from these results that the wire saw in the example of the present invention can improve efficiency with which workpieces are ground.

So far, the present invention has been described in detail, but the present invention is not limited to the embodiments or example described above. It will be understood that various design changes are possible without departing from the intended scope of the present invention.

### Reference Numerals

- 1: core wire
- 2: abrasive grain
- 3: adhesive layer
- 3a: adhesive
- 4: binder layer
- 5: first bobbin
- 6: immersion degreasing bath
- 7: acid immersion bath
- 8: first water cleaning bath
- 9: cathode
- 10: adhesive applying device
- 11: abrasive grain attaching device
- 12: second water cleaning bath
- 13: electrolytic plating bath
- 14: metal plate (anode)
- 15: third water cleaning bath
- 16: rust proofing bath
- 17: second bobbin
- 18: adhesive transfer roller
- 18a: tiny hole
- 30: workpiece (ingot)
- 31: supply reel
- 32: main roller

## Claims

1. A fixed abrasive grain wire saw formed by fastening many abrasive grains having a uniform granularity to an outer circumferential surface of a core wire with high strength as a single layer by use of a binder layer that covers an outer circumferential surface of the core wire, wherein:
many punctiform adhesive layers are coated to the outer circumferential surface of the core wire so as to be apart from one another and are linearly placed along an axis of the core wire at regular intervals to form at least three adhesives layer rows; and
the abrasive grains are tentatively fastened by the adhesive layers and are then permanently fastened by the binder layer, and abrasive grains placed on each two mutually adjacent adhesive layers are fastened in a state in which the abrasive grains are mutually spaced.

2. The fixed abrasive grain wire saw according to claim 1, wherein:
the core wire is made of a meal wire; and
the binder layer is made of a plated metal.

3. The fixed abrasive grain wire saw according to claim 2, wherein the adhesive layer is made of a rubber-based adhesive to have elasticity and forms a buffer layer that allows a relevant abrasive grain that abuts a workpiece to move in a direction crossing the outer circumferential surface of the core wire during machining of the workpiece.

4. The fixed abrasive grain wire saw according to any one of claims 1 to 3, wherein the adhesive layers are arrayed at equal intervals in each of the adhesive layer rows.

5. The fixed abrasive grain wire saw according to claim 4, wherein the abrasive grains are placed at equal intervals among the adhesive layer rows.

6. The fixed abrasive grain wire saw according to claim 5, wherein the adhesive layers forming the adhesive layer rows are placed on at least one spiral.

7. The fixed abrasive grain wire saw according to any one of claims 1 to 6, wherein a minimum interval of abrasive grains in adhesive layer rows is longer than a maximum interval of adhesive layer rows adjacent in a circumferential direction of the core wire.

8. The fixed abrasive grain wire saw according to any one of claims 1 to 7, wherein the adhesive layer is circular and a diameter of the adhesive layer is smaller than or equal to an average abrasive grain diameter and larger than or equal to 30% of the average abrasive grain diameter.

9. A method of manufacturing the fixed abrasive grain wire saw according to any one of claims 1 to 8, the method comprising the steps of:
placing a roller on a path through which the core wire moves, the roller having a plurality of tiny holes on an outer circumference of the roller in a circumferential direction;
filling the tiny holes in the roller with an adhesive;
moving the core wire while the outer circumferential surface of the core wire is in contact with the outer circumference of the roller;
applying a punctiform adhesive layer to the outer circumferential surface of the core wire by transferring an adhesive through the tiny holes in a state in which a relative speed between the tiny holes in the roller that is rotating and the outer circumferential surface of the core wire that is moving is adjusted so as to become zero;
dispersing abrasive grains to the outer circumferential surface of the core wire to which the adhesive has been transferred so as to tentatively fix the abrasive grains with the adhesive; and
further coating the outer circumferential surface of the core wire, on which the abrasive grains have been tentatively fixed, with a binder to permanently fasten the abrasive grains with the binder layer.

10. A method of cutting a workpiece by use of the fixed abrasive grain wire saw according to any one of claims 1 to 8 or the fixed abrasive grain wire saw manufactured by the method according to claim 9, wherein
in a state in which the fixed abrasive grain wire saw and a workpiece are mutually brought into pressure contact under a prescribed wire tension, the workpiece is cut by moving the fixed abrasive grain wire saw in one way or bidirectionally.
